**Europäisches Patentamt**

**European Patent Office**

**Office européen des brevets**

(19)

(11) Veröffentlichungsnummer : **0 165 438**
**B1**

(12)

# EUROPÄISCHE PATENTSCHRIFT

(45) Veröffentlichungstag der Patentschrift :
03.01.90

(51) Int. Cl.⁵ : **B 23 H   7/04**

(21) Anmeldenummer : **85105691.1**

(22) Anmeldetag : **10.05.85**

(54) Verfahren zur adaptiven Steuerung von Betriebsparametern beim funkenerosiven Schneiden und funkenerosive Schneidanlage hierfür.

Teilanmeldung 89102178.4 eingereicht am 10/05/85.

(30) Priorität : 11.05.84 CH 2355/84
25.05.84 DE 3419629

(43) Veröffentlichungstag der Anmeldung :
27.12.85 Patentblatt 85/52

(45) Bekanntmachung des Hinweises auf die Patenterteilung : 03.01.90 Patentblatt 90/01

(84) Benannte Vertragsstaaten :
CH DE FR GB IT LI LU SE

(56) Entgegenhaltungen :
CH–A–   548 256
CH–A–   594 477
DE–A– 2 833 765
DE–A– 3 204 798

(73) Patentinhaber : AG für industrielle Elektronik AGIE
Losone bei Locarno

CH-6616 Losone/Locarno (CH)

(72) Erfinder : Del Bello, Athos
Via Isola
CH-6516 Cugnasco (CH)
Erfinder : Kilcher, Beat
Via Ronco 13
CH-6611 Arcegno (CH)

(74) Vertreter : EGLI-EUROPEAN PATENT ATTORNEYS
Widenmayerstrasse 5
D-8000 München 22 (DE)

EP 0 165 438 B1

## Beschreibung

Die Erfindung bezieht sich auf ein Verfahren zur adaptiven Steuerung von Betriebsparametern beim funkenerosiven Schneiden eines Werkstücks in einer funkenerosiven Schneidanlage mit Druck- und/oder Saugspülung des Arbeitsspaltes.

Die Erfindung bezieht sich auch auf eine funkenerosive Schneidanlage mit einer Einrichtung zur Druck- und/oder Saugspülung des Arbeitsspaltes und einer adaptiven Steuereinrichtung zur Steuerung von Betriebsparametern mit wenigstens einem Führler und wenigstens einem Steuerglied.

Ein derartiges Verfahren sowie eine derartige Vorrichtung sind aus der CH-PS 548256 bekannt, jedoch nicht für die Schneiderosion, sondern nur für die Senkerosion. Beim bekannten Verfahren und bei der bekannten Vorrichtung werden beispielsweise als Betriebsparameter Stellgrössen für die Durchflussmenge des Spülmediums und die Pausendauer zwischen den Arbeitsimpulsen in Abhängigkeit von den zwei Zustandsvariablen, Zeitinterval des Quadrates des Regelfehlers für den Elektrodenvorschub und Durchschlagfestigkeit des Arbeitsspaltes gesteuert bzw. geregelt. Dabei hängen die Werte dieser beiden Zustandsvariablen von der durch den Arbeitsspalt durchfließenden Menge des Spülmediums, von der Pausendauer der den Arbeitsspalt durchschlagenden Arbeitsimpulse oder vom Tastverhältnis oder von der Repetitions-frequenz und von der Amplitude der Arbeitsimpulse ab. Das bekannte Verfahren und die bekannte Vorrichtung erlauben zwar eine brauchbare Regelung der Stellgrössen für die Betriebsparameter. Das bekannte Verfahren bzw. die bekannte Vorrichtung erlauben nicht, optimale Schnittbedingungen unter allen Umständen sicherzustellen, insbesondere die Gefahr von Drahtrissen zu bannen.

Ein Drahtriß entsteht häufig dadurch, daß sich die Menge an Spülmedium, die durch den Arbeitsspalt fließt, beispielsweise also die Menge an entionisiertem Wasser, ändert. Eine Veränderung des Durchsatzes an Spülmedium durch den Arbeitsspalt kann nicht nur durch Schwankungen der Spülmediumversorgung entstehen, sondern auch durch sich ändernde Schnittsituationen, insbesondere sich ändernde geometrische Bedingungen, einschließlich sich ändernder Spülquerschnitte. Eine Verschlechterung der Spülbedingungen kann beispielsweise dadurch auftreten, daß im Verlauf der Schneidbahn plötzlich eng aufeinanderliegende Konturelemente zu schneiden sind, die Schnittkontur in die Nähe einer Startbohrung gerät, die Werkstückoberflächen Stufen oder Schultern aufweisen oder von einem zylindrischen Schnitt in einen Raumschnitt übergegangen wird. Ungünstige Spülbedingungen hat man auch dann, wenn man von der Außenseite des Werkstückes anschneidet.

Ausgehend vom Stand der Technik liegt der Erfindung die Aufgabe zugrunde, das eingangs genannte gattungsgemäße Verfahren bzw. die eingangs genannte funkenerosive Schneidanlage unter weitestgehender Beibehaltung ihrer bisherigen Vorteile derart weiterzubilden, daß die Gefahr von Drahtrissen reduziert wird.

Diese Aufgabe wird in verfahrensmäßiger Hinsicht dadurch gelöst, daß beim gattungsgemäßen Verfahren der im Arbeitsspalt herrschende momentane Strömungzustand des Spülmediums als Bezugsgröße erfaßt und von dieser Bezugsgröße ausgehend andere Betriebsparameter als der Strömungszustand gesteuert werden.

In vorrichtungsmäßiger Hinsicht wird diese Aufgabe dadurch gelöst, daß der Fühler zur Ermittlung des momentanen Strömungszustandes des Spülmediums im Arbeitsspalt ausgelegt und das Steuerglied eingangsseitig mit dem Führlerausgang und ausgangsseitig mit einer Einrichtung zur Beeinflussung anderer Betriebsparameter als der Strömungszustand verbunden ist.

Weiterbildende Ausführungen sind Gegenstand des jeweiligen Unteransprüche.

Erfindungsgemäß werden also Istwerte, d. h. tatsächliche Verhältnisse des Strömungszustandes gemessen und hieran andere Betriebsparameter angepasst. Die Betriebsparameter können hierbei auch vorprogrammierte Einstellparameter sein, beispielsweise die Einstellparameter $To_1...To_n$.

Die genannten Lösungen haben den Vorteil, daß sie eine automatische Anpassung der Betriebsparameter an die jeweils im Arbeitsspalt herrschenden Strömungszustände ermöglichen, dadurch die Gefahr einer Drahtrißbildung reduzieren und dadurch zu einer höheren Arbeitssicherheit beim Schneiden führen.

Aus DD-Z « Elektrie » 36 (1982) : Heft 3, Seiten 126-129, Heft 5, Seiten 255-258, Heft 7, Seiten 371-375 ist es zwar bekannt, daß die Spülmenge im elektroerosiven Prozeß einen zentralen Platz einnimmt. Dies gilt sowohl für den Senkprozeß (Heft 3, a.a.O.) als auch für den elektroerosiven Trennprozeß mit Hilfe einer Drahtelektrode (Heft 7, a.a.O.). Aus Heft 3 (a.a.O.) ergibt sich, wie komplex der Zusammenhang der wechselseitigen Beeinflussung der wesentlichen, den elektroerosiven Prozeß beschreibenden Betriebsparameter ist. In Heft 7 (a.a.O.) wird festgestellt, daß die Spülbedingungen beim funkenerosiven Trennen mit einer Drahtelektrode wesentlich komplizierter sind, als beim elektroerosiven Senkprozeß. In Heft 5 (a.a.O.) werden unter anderem Prinzipien der Messung von Durchflußmengen des Spülmediums angegeben. Zur Erzielung stabiler Arbeitsbedingungen wird gemäß den drei genannten Literaturstellen vorgeschlagen, die Spülmenge während des Arbeitsprozesses mit Hilfe einer Regelschleife konstant zu halten. Es handelt sich demnach nicht um ein adaptives Verfahren, bei welchem ein Betriebsparameter als Bezugsgröße erfaßt und die anderen in Abhängigkeit von der Änderung der Bezugsgröße gesteuert werden. Hinzu kommt, daß die Informationen, die sich an sich aus der Änderung der im Arbeitsspalt herrschenden Spülmenge ergeben, durch die Spülmengen-Regelung auf einen konstanten Wert ungenutzt verloren gehen.

Bevorzugt werden Betriebsparameter des Generatorbetriebes, der Werkzeugelektrode und/oder der Relativbewegung zwischen Werkzeugelektrode und Werkstück gesteuert. Hierzu ist wenigstens ein Steuerglied der Schneidanlage mit wenigstens einer ersten Stelleinrichtung zur Einstellung des Generatorbetriebes und mit wenigstens einer zweiten Stelleinrichtung zur Einstellung der Relativbewegung zwischen Werkzeugelektrode und Werkstück verbunden.

Als Betriebsparameter des Generatorbetriebes kann vorzugsweise die Generatorleistung mittels der ersten Stelleinrichtung eingestellt werden. Handelt es sich hierbei um einen Impulsgenerator, dann wird mittels der ersten Stelleinrichtung die Impulsstärke, die Impulsdauer und/oder die Pausendauer in Abhängigkeit vom momentanen Strömungszustand geändert.

Statt oder zusätzlich zur Aenderung des Generatorbetriebes in Abhängigkeit vom momentanen Strömungszustand kann der Vorschub der Werkzeugelektrode mittels der zweiten Stelleinrichtung in Abhängigkeit vom momentanen Strömungszustand gesteuert werden.

Bei einer draht- oder bandförmigen Werkzeugelektrode kann gemäss einem weiteren Ausführungsbeispiel vorzugsweise die mechanische Spannung an der Werkzeugelektrode mittels der zweiten Stelleinrichtung geändert werden, und zwar wiederum in Abhängigkeit vom momentanen Strömungszustand des Spülmedium im Arbeitsspalt. Diese Aenderung kann ebenfalls zusätzlich oder alternativ zu den vorgenannten Aenderungen des Generatorbetriebes und/oder der Relativbewegung zwischen Werkzeugelektrode und Werkstück erfolgen.

Gemäß einer weiteren bevorzugten Ausführungsform kann der momentane Strömungszustand des Spülmediums im Arbeitsspalt durch das dort herrschende momentane Druckgefälle oder dessen momentanen Durchsatz bestimmt werden. Hierzu weist die Anlage entsprechende Fühler auf. Soll beispielsweise das Druckgefälle bestimmt werden, dann ist vorzugsweise ein Flüssigkeitsdruck-Fühler vorgesehen, der eingangsseitig mit einem in den Spüleingang oder Spülausgang des Arbeitsspaltes mündenden ersten Druckraum verbunden ist. Ein einziger Druckfühler genügt bereits dann zur ausreichenden Bestimmung des Druckgefälles, wenn man davon ausgehen kann, daß auf der anderen Seite des Arbeitsspaltes im wesentlichen konstanter Druck, beispielsweise Atmosphärendruck herrscht oder die Druckschwankungen auf der dem Druckfühler gegenüberliegenden Seite des Druckspaltes so gering sind, daß sie den Strömungszustand im Arbeitsspalt nur geringfügig ändern.

Bevorzugt weist aber die Anlage zwei Flüssigkeitsdruckfühler auf, die jeweils eingangsseitig mit einem Druckraum verbunden sind, wobei der eine Druckraum am Eingang und der andere Druckraum am Ausgang des Arbeitsspaltes angeordnet ist. Durch diese beiden Druckfühler läßt sich das im Arbeitsspalt wirksame Druckgefälle ausreichend genau bestimmen, beispielsweise dadurch, daß die beiden Druckfühler über ein Differenzglied zu einer Druckdifferenz-Fühlereinrichtung geschaltet sind.

Die vorgenannte Bestimmung des Strömungszustandes bzw. des Spülmediumdurchsatzes durch den Arbeitsspalt macht letztlich vom Bernoulli'schen Gesetz insoweit Gebrauch, als aus diesem auch hervorgeht, daß der Durchsatz eines Gases oder einer Flüssigkeit durch ein Leitungssystem von der Differenz der Drucke am Eingang und Ausgang des Systems abhängt. Aus diesem Gesetz kann man nun umgekehrt folgern, daß bei geringer werdendem Durchsatz von Spülmedium durch den Arbeitsspalt auch die Druckdifferenz an den beiden Enden des Arbeitsspaltes geringer werden muß. Über die Messung des Druckunterschiedes kann also auf die Spülverhältnisse im Arbeitsspalt zurückgeschlossen werden.

Nachstehend wird die Erfindung anhand von Ausführungsbeispielen unter Bezugnahme auf die beigefügten schematischen Zeichnungen noch näher erläutert.

In den Zeichnungen zeigen :

Fig. 1 einen Längsschnitt durch ein erste Ausführungsbeispiel ;

Fig. 2a bis 2d unterschiedliche Arbeitsbedingungen beim funkenerosiven Schneiden

Fig. 3 einen Schnitt durch ein zweites Ausführungsbeispiel ;

Fig. 4 einen Schnitt durch ein drittes Ausführungsbeispiel ;

Fig. 5 eine grafische Aufzeichnung gemessener Druckunterschiede beim Spülen des Arbeitsspaltes.

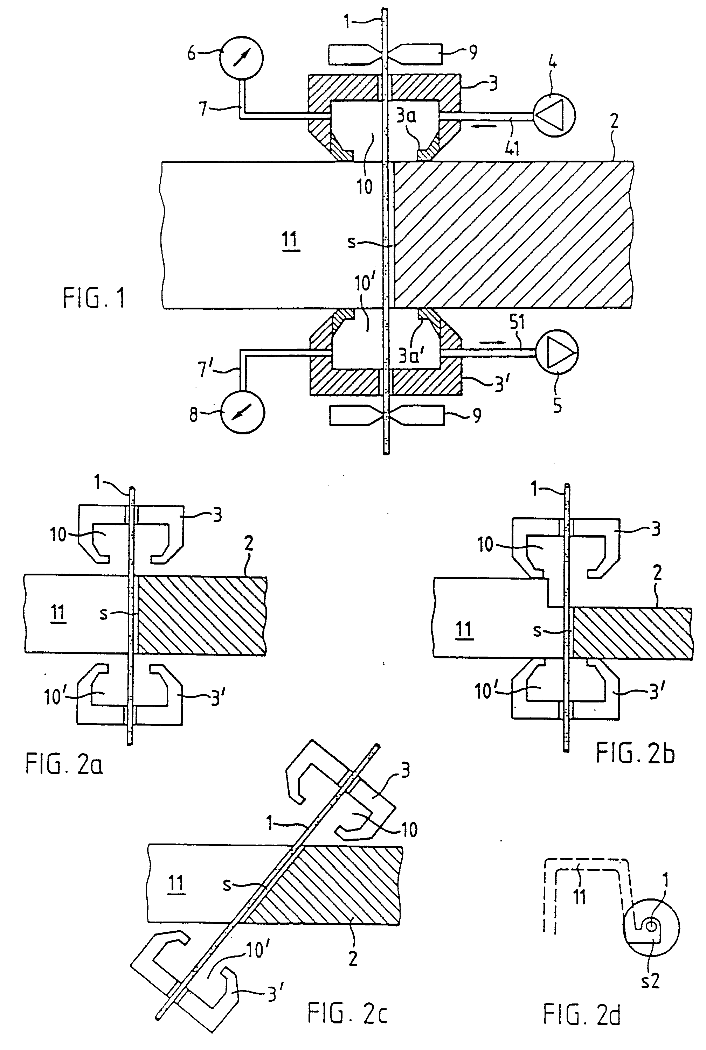

Fig. 1 veranschaulicht eine Schnittsituation beim Schneiden eines planparallelen Werkstücks 2 in einer funkenerosiven Schneidanlage. Aus Gründen einer übersichtlicheren Darstellung ist hierbei nur ein Auschnitt aus einer funkenerosiven Schneidanlage dargestellt, und zwar lediglich schematisch. Der Schneiddraht 1 wird mittels einer bekannten Schneiddraht-Vorschubeinrichtung in der vorliegenden Fig. 1 von links nach rechts durch das Werkstück 2 geführt. Der bereits geschnittene Schnittspalt ist in den Figuren ohne Schraffierung dargestellt und mit dem Bezugszeichen 11 versehen. Der noch nicht geschnittene Bereich des Werkstücks 2 ist schraffiert dargestellt. Der Arbeitsspalt hat das Bezugszeichen s erhalten. Die Schneidelektrode 1 wird mit Hilfe von (ebenfalls bekannten) Drahtführungselementen 9 in geometrisch definierter Lage — und im allgemeinen unter einer Zugspannung — im Werkstück 2 gehalten — in diesem Ausführungsbeispiel in einer vertikal durch das Werkstück 2 führenden Richtung. Es können dazu Führungselemente verwendet werden, wie sie beispielsweise aus dem Schweizer Patent 594 477 bekannt sind.

Zur Spülung des Arbeitsspaltes s ist ein Spülsystem vorgesehen, das ein an der planen Oberfläche des Werkstücks 2 dicht anliegendes Dichtsystem 3, eine mit diesem verbundene Zuflußleitung 41 und eine mit der Zuflußleitung 41 verbundene Druckpumpe 4 aufweist. Die Druckpumpe 4 fördert Spülmedium, beispielsweise entionisiertes Wasser, über die Zuflußleitung 41 in eine vom Dichtsystem 3 einerseits und einen Teil der planen Werkstückoberfläche andererseits umschlossene obere Druckkammer 10. Eine erhöhte Abdichtwirkung wird durch einen unmittelbar auf der Werkstückoberfläche aufliegenden Gleitring 3a des Dichtsystems 3 erzeilt. Der Gleitring 3a kann stirnseitig mit Ringrillen versehen sein, in denen Arbeitsmedium als gleitfördernde Schmerung gehalten werden kann. Außerdem ist er aus einem Werkstoff gefertigt, der außer Verschleißarmut gute Gleiteigenschaften auf metallischen Oberflächen zeigt.

Im gezeigten Ausführungsbeispiel ist das Dichtsystem 3 im Wesentlichen düsen- bzw. mundstückförmig ausgebildet. Es wird entsprechend der zu schneidenden Bahnkurve mit dem Schneiddraht 1 mitgeführt und ist hierzu beispielsweise mit den Führungselementen 9 kraftschlüssig verbunden.

Als Druckkammer kann z. B. auch der in der DE-PS 28 33 765 (AGIE) beschriebene abgedichtete Spülraum zwischen zwei im Abstand übereinander angeordneten Werkstücken dienen.

Auf der dem oberen Dichtsystem 3 gegenüberliegenden Seite des Arbeitsspaltes s ist ebenfalls ein Spülsystem angeordnet. Es weist ein unteres Dichtsystem 3', eine Abflußleitung 51 und eine Saugpumpe 5 auf. Hierbei ist das untere Spülsystem im Prinzip in gleicher Weise wie das obere Spülsystem aufgebaut. Es weist demgemäß auch eine untere Druckkammer 10' und einen unteren Gleitring 3a' auf. Auch das untere Dichtsystem bewegt sich synchron mit dem aus dem Arbeitsspalt s austretenden Teil des Schneiddrahts 1. Es ist hierzu beispielsweise mit den underen Drahtführungselementen 9 kraftschlüssig gekoppelt.

Die Druckpumpe 4 fördert das Spülmedium unter Druck in den Arbeitsspalt s hinein. Auf der gegenüberliegenden Seite wird das verschmutzte Medium unter Mitnahme abgetragener Werkstoffpartikel und Gasblasen durch die Saugpumpe 5 abgesaugt. Bevorzugt ist das aus der oberen und der unteren Spüleinrichtung bestehende Gesamtspülsystem so ausgelegt und eingestellt, dass der Schneiddraht 1 koaxial von einem Spülstrahl umspült wird.

Beim Ausführungsbeispiel gemäß Fig. 1 ist die obere Druckkammer 10 über ein Meßrohr 7 mit einem Überdruckmanometer 6 und die untere Druckkammer 10' über ein Meßrohr 7' mit einem Unterdruckmanometer 8 verbunden. Das Überdruckmanometer 6 zeigt also den Druck in der oberen Druckkammer 10, das Unterdruckmanometer 8 den Druck in der unteren Druckkammer 10' an. Durch Auswertung der beiden Druckmeßwerte gelangt man zum Druckgefälle, d. h. der Differenz zwischen dem Druckwert in der oberen Druckkammer 10 und dem Druckwert in der unteren Druckkammer 10'. Diese Differenz kann beispielsweise durch eine entsprechend Differenzschaltung automatisch ermittelt werden.

Wünscht man nun eine Steuerung von Betriebsparametern aufgrund des Momentanwertes des Druckgefälles, wird das momentane Druckgefälle, d. h. der Istwert des Druckgefälles mit einem vorgegebenen Sollwert — oder bei variablen Sollwerten einem sog. Leitwert — verglichen, aus dem Vergleichsergebnis ein Regelsignal abgeleitet und letzteres einem Stellglied zur Aenderung des gewünschten Betriebsparameters zugeführt.

Wie bereits einleitend erwähnt, kann aus der Abweichung zwischen Soll- und Istwert ein Signal zur Steuerung des Generatorbetriebes und/oder der Drahtspannung und/oder des Drahtvorschubes, einschließlich einer Drahtrückführung, abgeleitet werden.

Bei dem in Fig. 1 dargestellten Ausführungsbeispiel kann in der Regel davon ausgegangen werden, daß Schwankungen des Druckgefälles nur innerhalb eines kleinen Bereiches auftreten, da hier von einem Werkstück mit planparallelen Oberflächen ausgegangen wurde. Geringfügige Schwankungen könnten beispielsweise durch Schwankungen bei der Versorgung der Druckpumpe 4 mit Spülmedium, Störungen in der Druckpumpe 4 und/oder der Saugpumpe 5, oder beispielsweise kurzzeitig mangelhaftem Dichtschluß zwischen Gleitring 3a oder 3a' und der Werkstückoberfläche bedingt sein.

Fig. 2 zeigt einige Möglichkeiten, bei denen die Spülbedingungen beim Schneiden nicht so optimal sind, insbesondere bei denen ein schlechter Dichtschluß zwischen dem Dichtsystem 3 bzw. 3', d. h. dem Mundstück, und der Werkstückoberfläche gegeben sind.

In Fig. 2 sowie in den folgenden Figuren werden die in Figur 1 verwendeten Bezugszeichen verwendet, soweit es sich um technisch-funktionell gleiche Elemente handelt.

Fig. 2a zeigt eine Schnittsituation, bei der ein Abstand zwischen der oberen und unteren Dichtsystem 3 bzw. 3' zur Werkstückoberfläche erforderlich ist, beispielsweise aus kollisions- oder aufspanntechnischen Gründen.

In Fig. 2b ist ein schlechter Dichtschluß zwischen dem oberen Spülsystem und der oberen Werkstückoberfläche gegeben, da das Werkstück 2 auf seiner oberen Oberfläche eine Stufe aufweist. Entsprechendes gilt auch für den Fall, daß das Werkstück 2 auf seiner unteren Oberfläche abgesetzt ist.

In Fig. 2c ist ein schlechter Dichtschluß dadurch gegeben, daß ein konischer Schnitt ausgeführt werden muß.

Fig. 2d zeigt eine Schneidsituation, bei welcher der Schneiddraht 1 um enge aufeinanderfolgende Ecken geführt werden muß. Es entsteht hierbei eine vergleichsweise große Spülfläche s2, die demgemäß auch einen größeren Spülmediumdurchsatz erfordert.

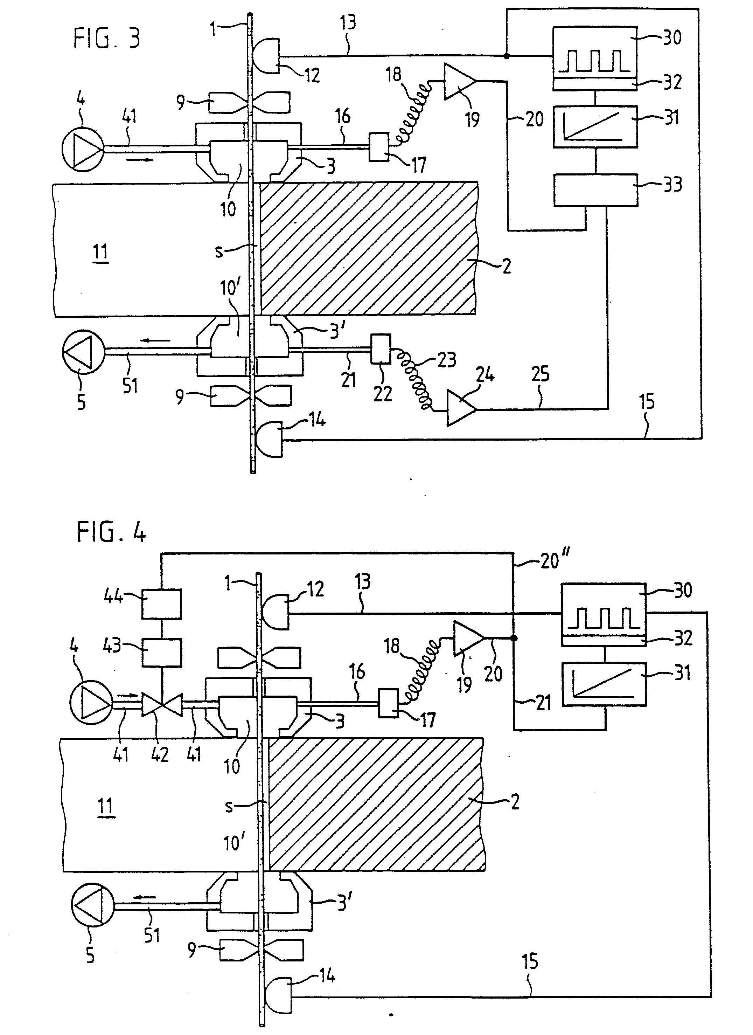

Die Darstellung in Fig. 3 weicht zunächst insoweit von der Darstellung in Fig. 1 ab, als noch ein Impulsgenerator 30, die Stromzuführungen 12 und 14 zum Schneiddraht 1 sowie die elektrischen Verbindungsleitungen 13 und 15 zwischen dem Generator 30 und den Stromzuführungen 12 und 14 zeichnerisch dargestellt sind. Der dargestellte Generator 30 ist in diesem und dem folgenden Ausführungsbeispiel ein Impulsgenerator.

Die in Fig. 1 dargestellten Überdruck- bzw. Ünterduckmanometer 6 und 8 sowie die Meßrohre 7 und 7' sind in diesem Ausführungsbeispiel durch beliebige Druckfühler 17 und 22 und Meßleitungen 16 und 21 realisiert. Die Meßleitungen 16 und 21 können hierbei dünne Rohre oder Druckschläuche sein. Die Druckfühler 17 und 22 sind jeweils mit elektro-fluidischen Wandlern bestückt, deren Ausgangssignale über Spiralkabel 18 und 23 jeweils einem Signalverstärker 19 bzw. 24 zugeführt werden. Mit den Spiralkabeln 18 und 23 werden unterschiedliche Abstände zwischen den Druckfühlern 17 bzw. 22 und den ihnen zugeordneten Verstärkern 19 bzw. 24 überbrückt.

Die Ausgangssignale der Signalverstärker 19 und 24 werden über die elektrischen Leitungen 20 und 25 einem gemeinsamen Differenzglied 33 zugeführt. Das Ausgangssignal des Differenzglieds 33 ist gleich der Differenz der von den Signalverstärkern 19 und 24 ausgehenden Drucksignale. Das Ausgangssignal des Differenzgliedes 33 wird einem Steuerglied 31 zugeführt. Das Steuerglied 31 vergleicht zunächst in einer Vergleichsstufe die gemessene Druckdifferenz, d. h. den Istwert der Druckdifferenz, mit einem vorgegebenen Sollwert für die Druckdifferenz. Das Ergebnis dieses Vergleichs bildet das sog. Fehlersignal, aus dem dann im Steuerglied 31 ein Steuersignal zur Ansteuerung einer nachgeschalteten Generator-Stelleinrichtung 32 abgeleitet wird. Die Generator-Stelleinrichtung 32 ist derart ausgelegt, daß mit ihr die Impulsfrequenz des Generators, d. h. die Impuls- und/oder die Pausendauer geändert werden kann. Hierbei ist das Steuerglied 31 in Verbindung mit der Generator-Stelleinrichtung 32 derart ausgelegt, daß die einem unter dem Sollwert liegenden momentanen Druckgefälle längs des Arbeitsspaltes s die Generatorleistung über die Impulsfrequenz reduziert wird, dem Schneiddraht 1 also weniger elektrische Energie pro Zeit zugeführt wird. Statt der Impulsfrequenz kann auch die Impulshöhe reduziert werden.

Bei dem in Fig. 3 dargestellten Ausführungsbeispiel können grundsätzlich auch die Druck- und die Saugseite vertauscht, d. h. der in Fig. 3 unteren Druckkammer 10' das Spülmedium unter Druck zugeführt und aus der oberen Druckkammer 10 wieder abgesaugt werden.

Statt dessen kann das Spülmedium auch beidseitig, d. h. durch das obere und durch das untere Spülsystem mit Druck dem Arbeitsspalt s zugeführt werden. In diesem Fall werden die von den Signalverstärkern 19 und 24 ausgehenden Signale nicht einem gemeinsamen Differenzglied zugeführt. Vielmehr ist jedem Verstärker 19 und 24 ein eigenes — nicht dargestelltes — Steuerglied nachgeschaltet. Das Steuerglied nimmt in an sich bekannter Weise einen Vergleich zwischen dem Ist- und dem Sollwert vor und leitet aus der Differenz zwischen Ist- und Sollwert in bekannter Weise ein Steuersignal ab. Um sicherzustellen, daß bereits dann die Generatorleistung reduziert wird, wenn nur einer der beiden Druckfühler 17 oder 22 ein unterhalb des Sollwertes liegendes Drucksignal anzeigt, sind die Ausgänge der beiden — nicht dargestellten — Steuerglieder über ein gemeinsames ODER-Glied mit der Generator-Stelleinrichtung 32 verbunden.

Grundsätzlich wird eine verbesserte Steuerung der Spülbedingungen bereits dann erreicht, wenn nur eine Druckkammer 10 oder 10' mit einem Druckfühler 17 oder 22 verbunden ist. Hierbei kann das Spülmedium entweder unter Druck in die Druckkammer 10 eingeführt oder aus dieser abgesaugt werden. Diese Maßnahme hat den Vorteil eines geringeren meßtechnischen Aufwandes. Sie wird sich in aller Regel aber nur in den Fällen lohnen, in denen der Arbeitsspalt s relativ kurz, bzw. sehr dünn ist.

Beim vorangehenden Ausführungsbeispiel wurde der Strömungszustand des Spülmedium im Druckspalt durch Messung des Spüldrucks bzw. des Spüldruckgefälles ermittelt und aus dem Meßergebnis ein Steuersignal zur Beeinflussung der Generatorleistung abgeleitet. Grundsätzlich ist es jedoch auch möglich, aus dem Meßergebnis ein Steuersignal zur Beeinflussung der Drahtspannung und/oder des Drahtvorschubs abzuleiten. Auch können mehrere der vorgenannten Betriebsparameter gemeinsam in Abhängigkeit vom momentanen Strömungszustand beeinflußt werden.

Ein Ausführungsbeispiel zur gemeinsamen Beeinflussung der Generatorleistung und der Spülmediumzufuhr ist anhand der Fig. 4 schematisch veranschaulicht.

Die in den Fig. 3 und 4 schematisch dargestellten Ausführungsbeispiele weichen im wesentlichen dadurch voneinander ab, daß der Druck nur in der oberen Druckkammer 10 gemessen und das Meßsignal zusätzlich einem weiteren Steuerglied 44 zur Steuerung einer Stelleinrichtung für ein Regulierventil 42 zugeführt wird. Das Regulierventil 42 ist in der Zuflußleitung 41 angeordnet. Mit ihm kann in bekannter Weise der wirksame Strömungsquerschnitt des Spülmediums in der Zuflußleitung 41 geändert werden. Die Einstellung des Regulierventils 42 erfolgt über einen Servomotor 43, der hier als Stelleinrichtung dient. Der Servomotor 43 wird von dem Steuerglied 44 angesteuert. Das Steuerglied 44 vergleicht in bekannter Weise den ihm vom Verstärker 19 zugeführten Druck-Ist-Wert mit einem vorgegebenen Druck-Soll-Wert und verarbeitet das daraus erhaltene Fehlersignal zu einem Steuersignal für den Servomotor 43. Da beim dargestellten Ausführungsbeispiel nicht das Druckgefälle, sondern nur ein Druckwert gemessen wird, kann auf das in Fig. 3 dargestellte Differenzglied 33 verzichtet werden.

Grundsätzlich kann die Gefahr eines Drahtrisses bereits dadurch reduziert werden, daß das Ausgangssignal des Druckfühlers 17 lediglich zur Steuerung des Regulierventils 42 herangezogen wird. Die gleichzeitige Steuerung der Generatorleistung und des Strömungsquerschnitts in der Zuflußleitung 41 hat jedoch den Vorteil, daß ein geringerer Eingriff am Generator 30 und/oder am Regulierventil 42 zu Verhinderung eines Drahtrisses erforderlich ist. Denn beide Maßnahmen unterstützen sich wechselseitig zur Erreichung des genannten Zieles. Liegt nämlich der Istwert in der Druckkammer 10 unterhalb des Sollwertes, wird nicht nur der Strömungsquerschnitt des Regulierventils 43 vergrößert, sondern auch die vom Generator 30 an die Stromzuführung 12 und 14 abgegebene Leistung verringert. Die Vergrößerung des Strömungsquerschnitts des Regulierventils 42 dient der Wiederherstellung eines optimalen Strömungszustandes und damit einer Reduzierung der Drahtrißgefahr durch Verbesserung der elektrischen und hydrodynamischen Verhältnisse im Arbeitsspalt s. Die Reduzierung der vom Generator 30 an den Schneiddraht 1 abgegebenen leektrischen Leistung führt ebenfalls zu einer geringeren Belastung des Schneiddrahtes 1.

Das in Fig. 4 dargestellte Ausührungsbeispiel stellt vom regeltechnischen Standpunkt aus gesehen eine Kombination eines Regelsystems mit einem Steuersystem zur Lösung ein und derselben Aufgabe dar. Durch die Steuerung des Regulierventils 42 wird nämlich unmittelbar auf den Druck in der Druckkammer 10 eingewirkt. Das Ergebnis dieser Einwirkung mißt der Druckfühler 17, über dessen Ausgangssignal wiederum das Regulierventil 42 gesteuert wird. Es handelt sich demnach um einen geschlossenen Kreis im Sinne einer Regelung im engeren Sinne. Der aus dem Druckfühler 17, dem Steuerglied 31, der Generator-Stelleinrichtung 32, dem Generator 30 und der Stromzuführung 12 bestehende Steuerkreis ist hingegen ein offener Kreis, also eine sog. Steuerkette.

Statt der oder zusätzlich zu den oben beschriebenen Maßnahmen kann das vom Druckfühler 17 gemessene Signal auch einem weiteren — nicht gezeigten — Steuerglied zur unmittelbaren Steuerung der Pumpenleistung, d. h. der von ihr geförderten Menge an Spülmedium zugeführt werden.

Bei dem in Fig. 4 dargestellten Ausführungsbeispiel kann — entsprechend dem in Fig. 3 dargestellten Ausführungsbeispiel — auch die untere Druckkammer 10 mit einem Druckfühler und nachgeschaltetem Signalverstärker bestückt sein. Handelt es sich hierbei wieder um ein Druck/Saug-Spülsystem, dann werden die Ausgänge der Signalverstärker wiederum einem Differenzglied zugeführt (wie in Fig. 3) und von dort an die entsprechenden Steuerglieder weitergeleitet, beispielsweise an das dem Generator 30 vorgeschaltete Steuerglied 31 und das dem Regulierventil 42 vorgeschaltete Steuerglied 44. Als weitere Alternative kann die in Fig. 4 dargestellte Saugpumpe 5 auch durch eine Druckpumpe ersetzt werden.

Die Generator-Stelleinrichtung 32 greift zur Änderung des Generatorbetriebs, insbesondere also zur Änderung der Generatorleistung auf bekannte Weise durch Änderung der Impulsbreite oder -form etc. in den Generatorbetrieb ein.

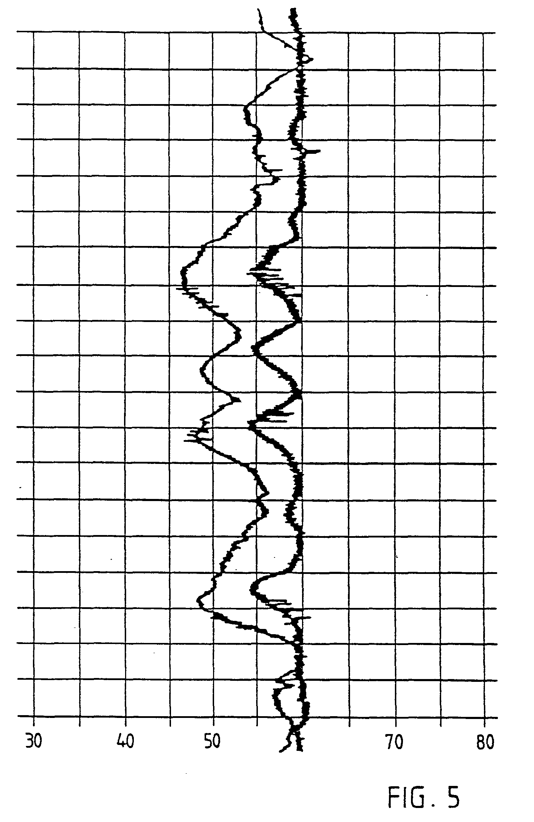

Fig. 5 ist eine Wiedergabe einer Aufzeichnung von Druckkurven mittels eines XY-Schreibers. Hierbei wurde im wesentlichen das Ausführungsbeispiel nach Fig. 1 zugrundegelegt.

Mit der Erfindung wird nicht nur das in der Fachwelt bereits seit langem intensiv behandelte Problem der Reduzierung einer Drahtrißgefahr, sondern gleichzeitig auch das — ebenfalls seit langem intensiv behandelte Problem — der Erzielung möglichst optimaler Spülbedingungen — und damit auch elektrischer Bedingungen — im Arbeitsspalt mit einfachsten technischen Mitteln gelöst.

## Patentansprüche

1. Verfahren zur adaptiven Steuerung von Betriebsparametern beim funkenerosiven Schneiden eines Werkstücks (2) in einer funkenerosiven Schneidanlage mit Druck- und/oder Saugspülung des Arbeitsspaltes (s), dadurch gekennzeichnet, daß der im Arbeitsspalt (s) herrschende mementane Strömungszustand des Spülmediums als Bezugsgröße erfaßt und von dieser Bezugsgröße ausgehend, andere Betriebsparameter als der Strömungszustand gesteuert werden.

2. Verfahren nach Anspruch 1, dadurch gekennzeichnet, daß als momentane Strömungszustandsgröße das im Arbeitsspalt (s) herrschende momentante Druckgefälle erfaßt wird.

3. Verfahren nach wenigstens einem der vorstehenden Ansprüche, dadurch gekennzeichnet, daß als momentane Strömungszustandsgröße der Momentandurchsatz durch den Arbeitsspalt (s) erfaßt wird.

4. Verfahren nach wenigstens einem der vorstehenden Ansprüche, dadurch gekennzeichnet, daß Betriebsparameter des Generatorbetriebs, der Werkzeugelektrode (1) und/oder der Relativbewegung zwischen Werkzeugelektrode (1) und Werkstück (2) gesteuert werden.

5. Verfahren nach Anspruch 4, dadurch gekennzeichnet, daß die Generatorleistung, die Impulsstärke, die Impulsdauer, die Pausendauer und/oder der Vorschub der Werkzeugelektrode (1) gesteuert werden.

6. Verfahren nach Anspruch 4 oder 5 unter Verwendung einer draht- oder bandförmigen Werkzeugelektrode (1), dadurch gekennzeichnet, daß die Spannung der Werkzeugelektrode (1) gesteuert wird.

7. Funkenerosive Schneidanlage mit
a) einer Einrichtung (4, 5, 41, 51) zur Druck- und/oder Saugspülung des Arbeitsspaltes (s) und
b) einer adaptiven Steuereinrichtung (6, 8; 17, 22, 31) zur Steuerung von Betriebsparametern mit wenigstens einem Fühler (6; 8; 17; 22) und wenigstens einem Steuerglied (31), dadurch gekennzeichnet, daß
c) der Fühler (6; 8; 17; 22) zur Ermittlung des momentanen Strömungszustandes des Spülmediums im Arbeitsspalt (2) ausgelegt und
d) das Steuerglied (31) eingangsseitig mit dem Fühlerausgang und ausgangsseitig mit einer Einrichtung zur Beeinflussung anderer Betriebsparameter als der Strömungszustand verbunden ist.

8. Anlage nach Anspruch 7, dadurch gekennzeichnet, daß der Fühler (6 ; 17) ein Flüssigkeitsdruck-Fühler ist, der eingangsseitig mit einem in den Spüleingang oder Spülausgang des Arbeitsspaltes (s) mündenden ersten Druckraum (10) verbunden ist.

9. Anlage nach Anspruch 8, dadurch gekennzeichnet, daß ein zweiter Flüssigkeitsdruck-Fühler (8 ; 22) vorgesehen ist, der eingangsseitig mit einem dem ersten Druckraum (10) entsprechenden, jedoch auf der anderen Seite des Arbeitsspaltes (s) angeordneten zweiten Druckraum (10') verbunden ist.

10. Anlage nach Anspruch 9, dadurch gekennzeichnet, daß die beiden Flüssigkeitsdruck-Fühler (6, 8 ; 17, 22) durch einen Druckdifferenzfühler realisiert sind.

11. Anlage nach wenigstens einem der Ansprüche 7 bis 10 dadurch gekennzeichnet, daß das Steuerglied (31) ausgangsseitig mit wenigstens einer ersten Stelleinrichtung (32) zu Einstellung des Generatorbetriebes und/oder einer zweiten Stelleinrichtung zur Einstellung der Relativbewegung zwischen Werkzeugelektrode (1) und Werkstück (2) verbunden ist.

12. Anlage nach Anspruch 11, dadurch gekennzeichnet, daß die erste Stelleinrichtung (32) zur Einstellung der Generatorleistung, der Impulsstärke, der Impulsdauer und/oder der Pausendauer und die zweite Stelleinrichtung zur Einstellung des Werkzeugelektroden-Vorschubs ausgelegt ist.

13. Anlage nach wenigstens einem der Ansprüche 7 bis 11 mit einer band- oder drahtförmigen Werkzeugelektrode (1), dadurch gekennzeichnet, daß die zweite Stelleinrichtung zur Einstellung der Werkzeugelektrodenspannung ausgelegt ist.

## Claims

1. Method for adaptive control of operational parameters with spark erosion cutting of a workpiece (2) in a park erosion cutting installation with pressure and/or suction cleaning of the working gap (s), characterised in that the momentary condition of flow of the cleaning medium prevailing in the working gap (s) is measured as a reference variable and starting from this reference variable, operational parameters other than the condition of flow are regulated.

2. Method according to claim 1, characterised in that a momentary drop in pressure prevailing in the working gap (s) is measured as the momentary condition of flow variable.

3. Method according to at least one of the preceding claims, characterised in that the momentary throughput through the working gap (s) is measured as momentary condition of flow variable.

4. Method according to at least one of the preceding claims, characterised in that the operational parameters of the generator operation, of the tool electrode (1) and/or of the relative motion between the tool electrode (1) and the workpiece (2) are regulated.

5. Method according to claim 4, characterised in that the generator output, the pulse strength, the pulse duration, the rest period and/or the feed of the tool electrode (1) are regulated.

6. Method according to claim 4 and 5, using a wire or band-shaped tool electrode (1), characterised in that the voltage of the tool electrode (1) is regulated.

7. Spark erosion cutting installation with
a) a device (4, 5, 41, 51) for pressure and/or suction cleaning of the working gap (s) and
b) an adaptive control device (6, 8 ; 17, 22, 31) for controlling operational parameters with at least one sensor (6 ; 8 ; 17 : 22) and at least one control element (31), characterised in that
c) the sensor (6 ; 8 ; 17 ; 22) is designed for determining the momentary condition of flow of the cleaning medium in the working gap (2) and
d) the control element (31) is connected on the input side to the sensor output and on the output side to a device for affecting operational parameters other than the condition of flow.

8. Installation according to claim 7, characterised in that the sensor (6 ; 17) is a liquid pressure sensor, which on the input side is connected to a first pressure chamber (10) opening into the cleaning input or cleaning output of the working gap (s).

9. Installation according to claim 8, characterised in that a second liquid pressure sensor (8 ; 22) is provided, which on the input side is connected to a second pressure chamber (10') corresponding to the first pressure chamber (10), arranged, however, on the other side of the working gap (s).

10. Installation according to claim 9, characterised in that both liquid pressure sensors (6, 8 ; 17, 22) are realised by a pressure difference sensor.

11. Installation according to at least one of claims 7 to 10, characterised in that the control element (31) is connected on the output side to at least one first adjusting device (32) for adjustment of the generator operation and/or a second adjusting device for adjusting the relative motion between the tool electrode (1) and workpiece (2).

12. Installation according to claim 11, characterised in that the first adjusting device (32) is designed for adjusting the generator output, the pulse strength, the pulse duration and/or the rest period and the second adjusting device is designed for adjusting the tool electrode feed.

13. Installation according to at least one of claims 7 to 11, with a wire or band-shaped tool electrode (1) characterised in that the second adjusting device is designed for adjusting the tool electrode voltage.

## Revendications

1. Procédé pour la commande adaptative des paramètres de fonctionnement dans le découpage par électroérosion d'une pièce (2) dans une installation de découpage par électro-érosion qui comporte un balayage de la fente de travail (s) par pression et/ou aspiration, caractérisé en ce qu'on capte l'état d'écoulement instantané du fluide de balayage régnant dans la fente de travail (s) en tant que grandeur de référence et qu'à partir de cette grandeur de référence, on commande des paramètres du fonctionnement autres que l'état d'écoulement.

2. Procédé selon la revendication 1, caractérisé en ce qu'on capte, en tant que grandeur de l'état d'écoulement instantané, le gradient de pression instantané qui règne dans la fente de travail (s).

3. Procédé selon au moins une des revendications précédentes, caractérisé en ce qu'on capte en tant que grandeur de l'état d'écoulement instantané le débit instantané qui traverse la fente de travail (s).

4. Procédé selon au moins une des revendications précédentes, caractérisé en ce qu'on commande des paramètres de fonctionnement du générateur, de l'électrode outil (1) et/ou du mouvement relatif entre l'électrode outil (1) et la pièce (2).

5. Procédé selon la revendication 4, caractérisé en ce qu'on commande la puissance du générateur, la force des impulsions, la durée des impulsions, la durée des pauses et/ou l'avance de l'électrode outil (1).

6. Procédé selon la revendication 4 ou 5, avec utilisation d'une électrode outil (1) en forme de fil ou de bande, caractérisé en ce qu'on commande la tension de l'électrode outil (1).

7. Installation de découpage par électro-érosion, comprenant

a) un dispositif (4, 5, 41, 51) pour le balayage de la fente de travail (s) par pression et/ou aspiration, et

b) un dispositif de commande adaptative (6, 8 ; 17, 22, 31) servant à commander des paramètres de fonctionnement, qui comprend au moins un capteur (6 ; 8 ; 17 ; 22) et au moins un organe de commande (31), caractérisée

c) en ce que le capteur (6 ; 8 ; 17 ; 22) est construit pour capter l'état instantané de l'écoulement du fluide de balayage dans la fente de travail (2), et

d) en ce que l'organe de commande (31) est relié, côté entrée, à la sortie du capteur et, côté sortie, à un dispositif servant à agir sur des paramètres du fonctionnement autres que l'état d'écoulement.

8. Installation selon la revendication 7, caractérisée en ce que le capteur (6 ; 17) est un capteur de pression du liquide qui est relié, côté entrée, à une première chambre de pression (10) qui débouche dans l'entrée de balayage ou dans la sortie de balayage de la fente de travail (s).

9. Installation selon la revendication 8, caractérisée en ce qu'il est prévu un deuxième capteur de pression de liquide (8 ; 22) qui est relié, côté entrée, à une deuxième chambre de pression (10') qui correspond à la première chambre de pression (10), mais qui est disposée à l'autre côté de la fente de travail (s).

10. Installation selon la revendication 9, caractérisée en ce que les deux capteurs de pression de liquide (6, 8 ; 17, 22) sont constitués par un capteur de différence de pression.

11. Installation selon au moins une des revendications 7 à 10, caractérisée en ce que l'organe de commande (31) est relié, côté sortie, à au moins un premier dispositif de réglage (32) servant à régler le fonctionnement du générateur et/ou à un deuxième dispositif de réglage servant à régler le déplacement relatif entre l'électrode outil (1) et la pièce (2).

12. Installation selon la revendication 11, caractérisée en ce que le premier dispositif de réglage (32) est construit pour régler la puissance du générateur, la force des impulsions, la durée des impulsions et/ou la durée des pauses, et le deuxième dispositif de réglage est construit pour régler l'avance de l'électrode outil.

13. Installation selon au moins une des revendications 7 à 11, comprenant une électrode outil (1) en forme de bande ou de fil, caractérisée en ce que le deuxième dispositif de réglage est construit pour régler la tension de l'électrode outil.

EP 0 165 438 B1

FIG. 1

FIG. 2a

FIG. 2b

FIG. 2c

FIG. 2d

FIG. 3

FIG. 4

FIG. 5